# EUROPEAN PATENT APPLICATION

(11) **EP 4 543 036 A1**
(43) Date of publication of application: **23.04.2025**
(21) Application number: 23826247.1
(22) Date of filing: 14.06.2023
(51) Int. Cl.: H04Q 11/00

(54) **BANDWIDTH ALLOCATION METHOD, OPTICAL COMMUNICATION SYSTEM, DEVICE, AND STORAGE MEDIUM**

(30) Priority: 22.06.2022 CN 202210710454
(71) Applicant: ZTE Corporation, Shenzhen, Guangdong 518057 (CN)
(72) Inventor: ZHANG, Lin, Shenzhen, Guangdong 518057 (CN); CAI, Liyong, Shenzhen, Guangdong 518057 (CN); WANG, Peng, Shenzhen, Guangdong 518057 (CN)
(74) Representative: Ziebig Hengelhaupt Intellectual Property Attorneys Patentanwaltskanzlei PartGmbB
(86) International application number: PCT/CN2023/100237
(87) International publication number: WO 2023/246598

(57) **Abstract**

The present application discloses a bandwidth allocation method, an optical communication system, a computer device, and a storage medium. The method comprises the steps of: allocating a fixed bandwidth to each of at least one second optical network unit (S1), obtaining first bandwidth allocation basis information (S2), and according to the first bandwidth allocation basis information, allocating a matching dynamic bandwidth to each second optical network unit (S3); or obtaining a fixed bandwidth allocated by a first optical network unit (P1), sending first bandwidth allocation basis information to the first optical network unit (P2), and obtaining a dynamic bandwidth allocated by the first optical network unit (P3).

## Description

### CROSS-REFERENCE TO RELATED APPLICATIONS

The present application is proposed based on and claims priority to the Chinese patent application No. 202210710454.2 filed on June 22, 2022, the entire content of which is incorporated herein by reference.

### TECHNICAL FIELD

The present application relates to the technical field of communications, in particular to a bandwidth allocation method, an optical communication system, a computer device, and a storage medium.

### BACKGROUND

With the decrease in costs of an optical communication network, an extension range of the optical communication network is becoming wider and wider. Based on Fiber To The Home (FTTH), applications such as Fiber To The Room (FTTR) and Fiber To The Desk (FTTD) have been further realized, and communication nodes in the optical communication network increase accordingly, which has brought about a bandwidth allocation problem among various communication nodes. For example, in FTTR, an optical gateway is usually set at an entrance electrical box, and at least one optical router is set in each room. At a physical level, the optical router is connected with the optical gateway through an optical distribution network. At a link level, the optical router is attached to the optical gateway, and the optical gateway can control a communication bandwidth between the attached optical routers and the optical gateway. If the optical gateway does not allocate the communication bandwidth reasonably to the attached optical routers, it is prone to causing insufficient utilization and waste of the bandwidth, and it is further prone to causing that a communication service cannot reach a predetermined quality due to influence of insufficient utilization of the bandwidth, resulting in affecting normal operation of the communication service.

### SUMMARY

The present application provides a bandwidth allocation method, an optical communication system, a computer device, and a storage medium.

In one aspect, an embodiment of the present application provides a bandwidth allocation method. The bandwidth allocation method includes: allocating a fixed bandwidth to each of at least one second optical network unit, wherein the second optical network unit is an optical network unit that is already attached to the first optical network unit at a first moment; obtaining first bandwidth allocation basis information; and allocating a matching dynamic bandwidth to each second optical network unit according to the first bandwidth allocation basis information.

In another aspect, an embodiment of the present application further provides a bandwidth allocation method, applied to a second optical network unit. The bandwidth allocation method includes: obtaining a fixed bandwidth allocated by a first optical network unit, wherein the second optical network unit is attached to the first optical network unit at a first moment; sending first bandwidth allocation basis information to the first optical network unit; and obtaining a dynamic bandwidth allocated by the first optical network unit, wherein the dynamic bandwidth is allocated by the first optical network unit according to the first bandwidth allocation basis information.

In another aspect, an embodiment of the present application further provides an optical communication system, including a first optical network unit and at least one second optical network unit; wherein the first optical network unit is configured to be attached by one or more second optical network units; and the first optical network unit is further configured to allocate a fixed bandwidth to each second optical network unit according to a fixed value, obtain first bandwidth allocation basis information, and allocate a matching dynamic bandwidth to each second optical network unit according to the first bandwidth allocation basis information.

In another aspect, an embodiment of the present application further provides an optical communication system, including a first optical network unit and at least one second optical network unit; wherein the first optical network unit is configured to be attached by one or more second optical network units; and the first optical network unit is configured to determine fixed and dynamic bandwidths thereof, allocate the fixed bandwidth to each second optical network unit according to a fixed value, obtain first bandwidth allocation basis information, and allocate a matching dynamic bandwidth to each second optical network unit according to the first bandwidth allocation basis information.

In another aspect, an embodiment of the present application further provides a storage medium, storing a processor executable program, wherein the processor executable program, when executed by a processor, is configured to execute the bandwidth allocation methods in the embodiments of the present application.

### BRIEF DESCRIPTION OF DRAWINGS

Fig. 1 is a schematic diagram of a first optical communication network structure to which a bandwidth allocation method in an embodiment may be applied.
Fig. 2 is a schematic diagram of a second optical communication network structure to which a bandwidth allocation method in an embodiment may be applied.
Fig. 3 is a schematic diagram of a third optical communication network structure to which a bandwidth allocation method in an embodiment may be applied.
Fig. 4 is a flow diagram of a bandwidth allocation method in an embodiment.
Fig. 5 is another flow diagram of a bandwidth allocation method in an embodiment.
Fig. 6 is a schematic diagram of a step of allocating a remaining bandwidth to a third optical network unit according to second bandwidth allocation basis information in an embodiment.
Fig. 7 is a schematic structural diagram of a computer device in an embodiment of the present application.

### DETAILED DESCRIPTION

In order to make an objective, technical solutions and advantages of the present application clearer, embodiments of the present application will be described below in detail with reference to accompanying drawings. It should be noted that embodiments in the present application and features in the embodiments may be mutually and arbitrarily combined in the case of no conflict.

In this embodiment, a bandwidth allocation method may be applied in an FTTR scenario, so the bandwidth allocation method may be illustrated by taking application of the bandwidth allocation method in the FTTR scenario as an example.

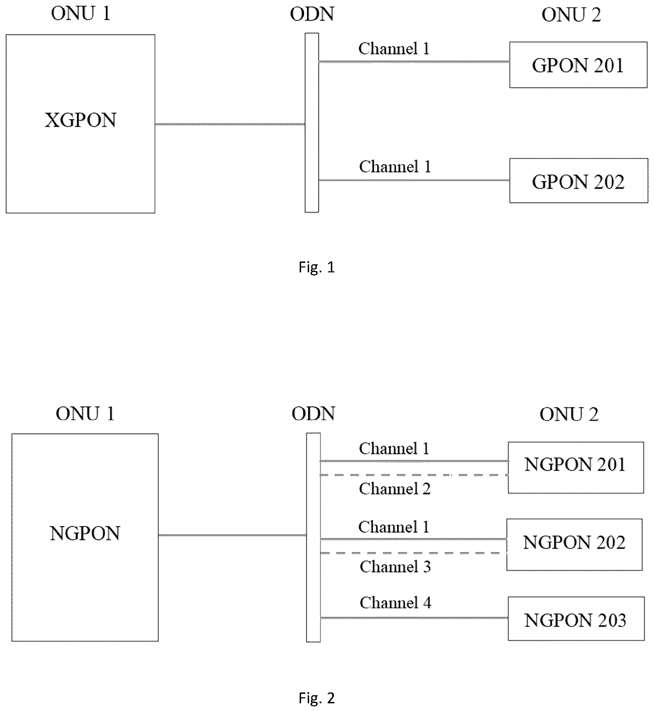

Fig. 1, Fig. 2, and Fig. 3 are respectively several typical optical communication network structures in an FTTR scenario. In Fig. 1, Fig. 2, and Fig. 3, ONU 1 is a first optical network unit in this embodiment, ONU 2 is a second optical network unit in this embodiment, and ODN is an optical distribution network in this embodiment. Fig. 1, Fig. 2, and Fig. 3 respectively show several forms of the first optical network unit ONU 1 and the second optical network unit ONU 2.

In Fig. 1, an optical network unit (ONU) based on an XGPON technology is used as the first optical network unit ONU 1, and an optical network unit based on a GPON technology is used as a second optical network unit ONU 2. At a physical level, the first optical network unit ONU 1 and the second optical network unit ONU 2 are connected through an optical distribution network (ODN). A channel between the first optical network unit and a second optical network unit labeled 201 is Channel 1, and a channel between the first optical network unit and a second optical network unit labeled 202 is Channel 2.

In Fig. 2, an optical network unit based on an NGPON technology is used as the first optical network unit ONU 1, and an optical network unit based on an NGPON technology is used as a second optical network unit ONU 2. At a physical level, the first optical network unit ONU 1 and the second optical network unit ONU 2 are connected through an optical distribution network. Channels between the first optical network unit and a second optical network unit labeled 201 are Channel 1 and Channel 2, channels between the first optical network unit and a second optical network unit labeled 202 are Channel 1 and Channel 3, and a channel between the first optical network unit and a second optical network unit labeled 203 is Channel 4.

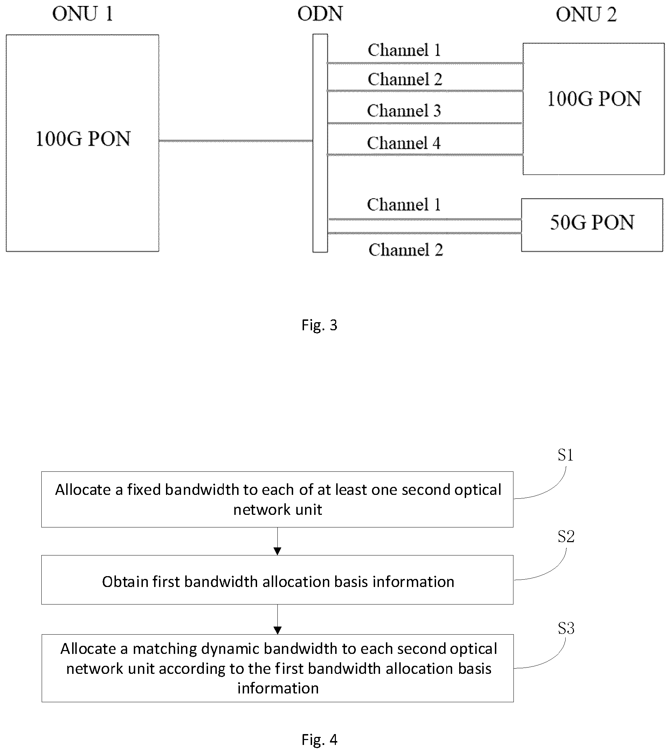

In Fig. 3, an optical network unit based on a 100GPON technology is used as the first optical network unit ONU 1, and an optical network unit based on 100GPON and 50GPON technologies is used as a second optical network unit ONU 2. At a physical level, the first optical network unit ONU 1 and the second optical network unit ONU 2 are connected through an optical distribution network. Channels between the first optical network unit and a second optical network unit based on 100GPON are Channel 1, Channel 2, Channel 3 and Channel 4, and channels between the first optical network unit and a second optical network unit based on 50GPON are Channel 1 and Channel 2.

In some occasions such as the FTTR, the first optical network unit in this embodiment may also be referred to as an "optical gateway", and the second optical network unit in this embodiment may also be referred to as an "optical router". The first optical network unit, namely, the optical gateway, may be connected with an optical line terminal (OLT) of a network service provider, so that an optical communication network composed of the first optical network unit and the second optical network unit accesses the Internet. The second optical network unit, namely the optical router, may be accessed by network terminals such as a mobile phone, a tablet computer, a notebook computer, and a wearable device by using a communication protocol such as WiFi, so as to provide communication services for these network terminals.

In this embodiment, the second optical network unit is attached to the first optical network unit. In one embodiment, it may refer to that at a certain specific moment, such as a first moment (the first moment may be a specific moment when step S1 in this embodiment is executed), the second optical network unit has been successfully attached to the first optical network unit. The first optical network unit may control a communication bandwidth between the attached second optical network unit and the first optical network unit. Unless otherwise specified, in this embodiment, the bandwidth of the second optical network unit refers to the bandwidth between the second optical network unit and the first optical network unit. Since data communication between the second optical network unit and the Internet needs to pass through the first optical network unit, the first optical network unit controlling the bandwidth of the second optical network unit is directly represented by that a speed of a network terminal connected with the second optical network unit accessing the Internet is affected.

For the optical communication network in the FTTR scenarios shown in Fig. 1, Fig. 2, and Fig. 3, as well as similar optical communication networks in other scenarios, the bandwidth allocation method can be executed. Referring to Fig. 4, in this embodiment, the bandwidth allocation method includes the following steps S1 to S3.

In step S1, a fixed bandwidth is allocated to each of at least one second optical network unit.

In step S2, first bandwidth allocation basis information is obtained.

In step S3, a matching dynamic bandwidth is allocated to each second optical network unit according to the first bandwidth allocation basis information.

In this embodiment, steps S1-S2 may be executed by the first optical network unit, or by one of the second optical network units, or by an independent device configured to control the first optical network unit and the second optical network unit. Step S3 may be executed by the first optical network unit. Since the same technical effect can be obtained regardless of which device executes each step in the bandwidth allocation method, execution by the first optical network unit may be taken as an example for illustration.

Prior to steps S1-S3, the first optical network unit may search for fixed and dynamic bandwidth thereof available for allocation to the attached second optical network unit. In one embodiment, the fixed bandwidth and the dynamic bandwidth may be two unrelated bandwidths, and the first optical network unit may set the fixed bandwidth and the dynamic bandwidth respectively. It should be noted that a sum of the fixed bandwidths and a sum of the dynamic bandwidths allocated to the second optical network units each time may not be fixed.

Prior to steps S1-S3, the first optical network unit may set the fixed bandwidth and the dynamic bandwidth according to its total bandwidth. The first optical network unit may set the total bandwidth according to a bandwidth upper limit provided by a network service provider, for example, the first optical network unit sets the total bandwidth to be the same as the bandwidth upper limit provided by the network service provider. The first optical network unit may divide the total bandwidth into two parts, one part serves as the sum of the fixed bandwidths allocated to the second optical network unit, and the other part serves as the sum of the dynamic bandwidths allocated to the second optical network unit. For example, when the total bandwidth is 1000 Mbps, the first optical network unit may set the sum of the fixed bandwidths to be 800 Mbps and set the sum of the dynamic bandwidths to be 200 Mbps.

In step S1, the first optical network unit allocates the fixed bandwidth to each second optical network unit according to a fixed value. The "fixed value" may refer to a fixed allocation ratio. For example, the allocation ratio of any two second optical network units is 1:1, in this way, the fixed bandwidth is evenly allocated to second optical network units according to the total number of the second optical network units attached to the first optical network unit. For example, in a case that two second optical network units, GPON 201 and GPON 202, are provided in Fig. 1 and the sum of the fixed bandwidths is 800 Mbps, 400 Mbps of bandwidth may be allocated to the each of two second optical network units, GPON 201 and GPON 202, respectively. On the other hand, the "fixed value" may refer to the same or different determined values corresponding to the second optical network units. For example, in Fig. 2, three second optical network units, NGPON 201, NGPON 202, and NGPON 203, are provided, and all of the three second optical network units can correspond to the same fixed value of 200 Mbps, in this way, when executing step S1, 200 Mbps of bandwidth is allocated to each of the three second optical network units, NGPON 201, NGPON 202, and NGPON 203 respectively. The three second optical network units in Fig. 2 may also correspond to different determined values, for example, NGPON 201 corresponds to 200 Mbps, NGPON 202 corresponds to 200 Mbps, and NGPON 203 corresponds to 400 Mbps. In this way, when executing step S1, 200 Mbps of bandwidth is allocated to NGPON 201, 200 Mbps of bandwidth is allocated to NGPON 202, and 400 Mbps of bandwidth is allocated to NGPON 203.

In another embodiment, in step S1, the first optical network unit allocates the fixed bandwidth to each second optical network unit according to a fixed value. The "fixed value" may refer to the fixed number of bandwidths. If the fixed bandwidth is 100 Mbps, a sum of the fixed bandwidths allocated to second optical network units is 400 Mbps in a case that the number of the second optical network units is 2, and a sum of the fixed bandwidths allocated to the second optical network units is 600 Mbps in a case that the number of the second optical network units is 3.

By executing step S1, a part of the fixed bandwidth may be allocated to each second optical network unit, and the second optical network unit may use the allocated bandwidth from the fixed bandwidth to perform data communication with the first optical network unit, thereby ensuring a basic communication function of each second optical network unit.

In this embodiment, the first bandwidth allocation basis information in steps S2 and S3 may be in various forms.

For the first form of first bandwidth allocation basis information, when executing step S2, which is the step of obtaining the first bandwidth allocation basis information, the following steps S201A and S202A may be executed.

In step S201A, the total number of the second optical network units is detected.

In step S202A, the total number of the second optical network units is taken as the first bandwidth allocation basis information.

In step S201A, the first optical network unit may count the total number of the second optical network units by detecting the number of optical network units connected with a WAN port thereof.

In step S202A, the total number of the second optical network units detected by the first optical network unit may be taken as the first bandwidth allocation basis information to be obtained in step S2.

On the basis of executing steps S201A-S202A, when executing the step S3, which is the step of allocating the matching dynamic bandwidth to each second optical network unit according to the first bandwidth allocation basis information, the following step may be executed.

In step S301A, the dynamic bandwidth is evenly allocated to each second optical network unit according to the total number of the second optical network units.

For example, for the optical communication network shown in Fig. 1, the total number of the second optical network units detected in S201A is 2. In the case where the sum of the dynamic bandwidths is 200 Mbps, step S301A is executed, and the bandwidths allocated to the two second optical network units, GPON 201 and GPON 202, are 100 Mbps respectively.

By executing step S301A of allocating the dynamic bandwidth to the second optical network units in an evenly-distributed manner, dynamic allocation of the dynamic bandwidth can be completed only by detecting the number of the second optical network units connected with the first optical network unit, without the need for other data communication or processing between the first optical network unit and the second optical network units. The load of the first optical network unit or the second optical network units is less affected, and allocation is fast. For some occasions where the second optical network units are frequently attached to the first optical network unit or detached from the first optical network unit, it is more suitable to execute step S301A for allocation. Such occasions include: a plurality of conference rooms are disposed in an office space, one first optical network unit is disposed in the office space, one second optical network unit is disposed in each conference room, and each second optical network unit has been connected with the first optical network unit at a physical layer. When someone uses the conference room, the second optical network unit in this conference room enters into a working state and is attached to the first optical network unit. When all personnel leave the conference room, the second optical network unit in this conference room enters into a sleep state so as to detach from the first optical network unit, so that the second optical network unit attached to the first optical network unit is in a dynamically changing state. By executing step S301A, the first optical network unit is prone to achieving fast and dynamic allocation of the dynamic bandwidth. The bandwidth is provided to the conference rooms in need, and the bandwidth is recovered from the conference rooms that no longer require the bandwidth, achieving efficient utilization of the bandwidth.

For the second form of first bandwidth allocation basis information, when executing step S2, which is the step of obtaining the first bandwidth allocation basis information, the following steps S201B to S204B may be executed.

In step S201B, a communication service type carried by each second optical network unit is detected.

In step S202B, a priority of each communication service type is determined.

In step S203B, a weight of each second optical network unit is determined according to the priority of the carried communication service type, wherein the weight of each second optical network unit is in positive correlation with the priority of the communication service type corresponding to the same second optical network unit.

In step S204B, the weight of each second optical network unit is taken as the first bandwidth allocation basis information.

In step S201B, each second optical network unit may report a currently-carried communication service type to the first optical network unit, or the first optical network unit may parse data packets sent by the second optical network units to determine the communication service types carried by the second optical network units. In one embodiment, the communication service types may be a file transfer service, an audio-video entertainment service, and a call service, etc.

In step S202B, the priority of the communication service type may be determined according to an importance degree of the communication service type. For one second optical network unit, the weight thereof is in positive correlation with the priority of the communication service type thereof. For example, a priority of the call service may be determined to be the highest, a priority of the file transfer service may be determined to be moderate, and a priority of the audio-video entertainment service may be determined to be lowest. In step S201B, if it is identified that one second optical network unit carries the plurality of communication service types, the priority of the communication service type with the highest priority may be taken as the priority determined in step S202B.

In step S203B, a mapping relationship between the priority and the weight of the communication service type may be edited into a data table. When executing step S203B, for one second optical network unit, the corresponding weight may be obtained by querying the priority of the communication service type carried by the second optical network unit, and taking the priority as the weight corresponding to this second optical network unit. For example, for the call service with the highest priority, the weight thereof may be determined to be 3. For the file transfer service with the moderate priority, the weight thereof may be determined to be 2. For the audio-video entertainment service with the lowest priority, the weight thereof may be determined to be 1.

When executing step S203B, the mapping relationship between the priority and the weight of the communication service type may further be fitted into a function expression or a curve. After determining the priority of the communication service type, the priority of the communication service type may be substituted into the function expression or the curve to query or calculate the weight of the communication service type.

In step S204B, the weight of each second optical network unit may be taken as the first bandwidth allocation basis information to be obtained in step S2.

On the basis of executing steps S201B-S204B, when executing step S3, which is the step of allocating the matching dynamic bandwidth to each second optical network unit according to the first bandwidth allocation basis information, the following step may be executed.

In step S301B, the dynamic bandwidth is allocated to each second optical network unit by taking the weight of each second optical network unit as an allocation ratio.

For example, for the optical communication network shown in Fig. 2, in S201B, it is detected that the communication service type carried by NGPON 201 is the call service, the weight corresponding to NGPON 201 is 3, the communication service type carried by NGPON 202 is the audio-video entertainment service, the weight corresponding to NGPON 202 is 1, the communication service type carried by NGPON 203 is the file transfer service, and the weight corresponding to NGPON 203 is 2. In the case where the sum of the dynamic bandwidths is 200 Mbps, step S301B is executed, the bandwidth allocated to NGPON 201 is 200 Mbps*3/(3+1+2)=100 Mbps, the bandwidth allocated to NGPON 202 is 200 Mbps*1/(3+1+2)=33.33 Mbps, and the bandwidth allocated to NGPON 203 is 200 Mbps*2/(3+1+2)=66.67 Mbps.

By executing step S301B of allocating the dynamic bandwidth according to the weights of the second optical network units, since the weight of each second optical network unit is in positive correlation with the priority of the communication service type carried by each second optical network unit, the bandwidth allocated to the second optical network unit carrying the communication service type with the higher priority may be larger, thereby first ensuring the normal operation of the communication service type with the high priority and achieving efficient bandwidth utilization under the same total bandwidth, which is suitable for occasions such as hotels and restaurants where the bandwidth requirement is high and the communication service types performed at the same time are numerous.

For the third form of first bandwidth allocation basis information, when executing step S2, which is the step of obtaining the first bandwidth allocation basis information, the following steps S201C and S202C may be executed.

In step S201C, bandwidth allocation request information uploaded by part or all of the second optical network units are received.

In step S202C, each bandwidth allocation request information is taken as the first bandwidth allocation basis information.

In step S201C, the second optical network units can detect service traffic sizes thereof and judge whether the bandwidths currently allocated thereto are sufficient to support the current service traffic size. In a case where the bandwidths allocated to the second optical network units are insufficient to support the current service traffic size, the second optical network units may generate the bandwidth allocation request information according to the bandwidth size required to be supplemented, and send the bandwidth allocation request information to the first optical network unit.

In step S201C, the second optical network units that generate the bandwidth allocation request information can package the bandwidth allocation request information into a physical layer operations, administration and maintenance (PLOAM) message or an ONU management and control interface (OMCI) message, and send the PLOAM message or the OMCI message to the first optical network unit, thereby sending the bandwidth allocation request information to the first optical network unit.

In one embodiment, a field may be added to the PLOAM message or the OMCI message as the bandwidth allocation request information. For example, a format of the field may be "enable=x, value=y". For example, if the PLOAM message or the OMCI message sent by one second optical network unit to the first optical network unit contains a field such as "enable=1, value=100", the represented bandwidth allocation request information may be "requesting the first optical network unit to allocate 100 Mbps of bandwidth to the second optical network unit on the basis of the originally-allocated bandwidth", while a field such as "enable=0" indicates that the second optical network unit does not need to be reallocated with the bandwidth.

In some cases, only part of the second optical network units need to be reallocated with the bandwidth, so in step S201C, the first optical network unit only receives the bandwidth allocation request information uploaded by part of the second optical network units.

In step S202C, the bandwidth allocation request information uploaded to the first optical network unit by the second optical network units may be taken as the first bandwidth allocation basis information to be obtained in step S2.

On the basis of executing steps S201C-S202C, when executing step S3, which is the step of allocating the matching dynamic bandwidth to each second optical network unit according to the first bandwidth allocation basis information, the following steps S301C and S302C may be executed.

In step S301C, when a sum of bandwidths corresponding to all the bandwidth allocation request information does not exceed a first remaining bandwidth, part corresponding to the bandwidth allocation request information of the first remaining bandwidth is allocated to the second optical network units, where the first remaining bandwidth is a remaining bandwidth by removing the fixed bandwidth allocated to each second optical network unit from a total bandwidth of the first optical network unit.

In step S302C, when a sum of the bandwidths corresponding to all the bandwidth allocation request information exceeds the first remaining bandwidth, the first remaining bandwidth is allocated to each second optical network unit proportionally by taking the bandwidths corresponding to all the bandwidth allocation request information as an allocation ratio.

In step S301C, taking the optical communication network shown in Fig. 2 as an example, assuming that NGPON 201 requests to allocate 50 Mbps of bandwidth in the bandwidth allocation request information sent to the first optical network unit, NGPON 202 does not send the bandwidth allocation request information to the first optical network unit, and NGPON 203 requests to allocate 10 Mbps of bandwidth in the bandwidth allocation request information sent to the first optical network unit, the sum of the bandwidths corresponding to all the bandwidth allocation request information is 50 Mbps+10 Mbps=60 Mbps. In the case where the sum of the dynamic bandwidths is 200 Mbps and no dynamic bandwidth is allocated, the first remaining bandwidth is 200 Mbps. If the sum of the bandwidths corresponding to all the bandwidth allocation request information does not exceed the first remaining bandwidth, the first optical network unit can fully respond to all the bandwidth allocation request information, and allocate 50 Mbps of bandwidth in the first remaining bandwidth to the second optical network unit NGPON 201 and allocate 10 Mbps of bandwidth in the dynamic bandwidth to the second optical network unit NGPON 203. Therefore, the remaining bandwidth of the dynamic bandwidth after allocation to the second optical network units is 200 Mbps-50 Mbps-10 Mbps=140 Mbps.

In step S302C, taking the optical communication network shown in Fig. 2 as an example, assuming that NGPON 201 requests to allocate 150 Mbps of bandwidth in the bandwidth allocation request information sent to the first optical network unit, NGPON 202 requests to allocate 50 Mbps of bandwidth in the bandwidth allocation request information sent to the first optical network unit, and NGPON 203 requests to allocate 50 Mbps of bandwidth in the bandwidth allocation request information sent to the first optical network unit, the sum of the bandwidths corresponding to all the bandwidth allocation request information is 150 Mbps+50 Mbps+50 Mbps=250 Mbps. In the case where the sum of the dynamic bandwidths is 200 Mbps and no dynamic bandwidth is allocated, the first remaining bandwidth is 200 Mbps. If the sum of the bandwidths corresponding to all the bandwidth allocation request information exceeds the sum of the first remaining bandwidths, the first optical network unit may determine the allocation ratio of the three second optical network units, NGPON 201, NGPON 202, and NGPON 203, to be 150 Mbps: 50 Mbps: 50 Mbps, i.e. 3:1:1. The first remaining bandwidth is allocated to the three second optical network units, NGPON 201, NGPON 202, and NGPON 203, in the ratio of 3:1:1, thus the dynamic bandwidth allocated to NGPON 201 is 200 Mbps*3/(3+1+1)=120 Mbps, while the dynamic bandwidth allocated to both NGPON 202 and NGPON 203 is 200 Mbps*1/(3+1+1)=40 Mbps.

By executing steps S301C-S302C of allocating the dynamic bandwidth according to the bandwidth allocation request information of the second optical network units, the authority to apply for dynamic bandwidth allocation can be delegated to the second optical network units, thereby directly meeting the bandwidth requirements actively proposed by the second optical network units. For example, the second optical network units can be authorized to only issue the bandwidth allocation request information in an emergency state, and the requested bandwidth is directly allocated to the second optical network unit, thereby achieving precise bandwidth allocation and reducing bandwidth waste.

By executing steps S2 and S3, working state information of the second optical network units, such as the total number of the second optical network units, the carried communication service types, or the actual bandwidth required for allocation can be determined as the first bandwidth allocation basis information. By allocating the dynamic bandwidth to each second optical network unit through the allocation ratio determined according to the first bandwidth allocation basis information, the dynamic bandwidth of the first optical network unit can be allocated according to the working state of each second optical network unit or the state of attachment to the first optical network unit, so that the allocation of the dynamic bandwidth can match the working state of each second optical network unit or the number of the second optical network units attached to the first optical network unit, thereby achieving dynamic allocation and efficient utilization of the bandwidths of the optical network units in the optical communication network, and reducing bandwidth waste in the optical communication network.

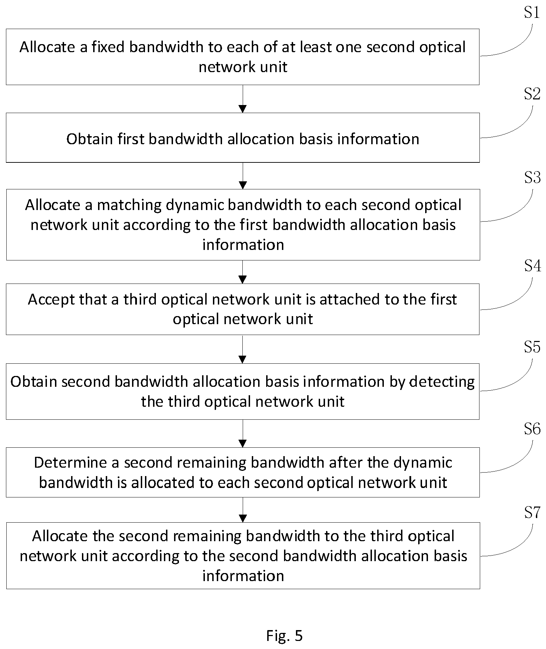

In this embodiment, referring to Fig. 5, the bandwidth allocation method further includes the following steps S4 to S7.

In step S4, a third optical network unit is controlled to be attached to the first optical network unit.

In step S5, second bandwidth allocation basis information is obtained by detecting the third optical network unit.

In step S6, a second remaining bandwidth remained in the first optical network unit after the dynamic bandwidth is allocated to each second optical network unit is determined.

In step S7, the second remaining bandwidth is allocated to the third optical network unit according to the second bandwidth allocation basis information.

In this embodiment, based on the same principle as steps S1-S2, steps S4-S6 may be executed by the first optical network unit, or by one of the second optical network units, or by an independent device configured to control the first optical network unit and the second optical network unit. Step S7 may be executed by the first optical network unit. Since the same technical effect can be obtained regardless of which device executes each step in the bandwidth allocation method, execution by the first optical network unit may be taken as an example for illustration.

In step S4, the third optical network unit and the second optical network units may be the same or different optical network units, that is, the third optical network unit may also be an optical network unit based on GPON, NGPON, 100GPON or 50GPON in Fig. 1, Fig. 2 and Fig. 3. The main difference between the third optical network unit and the second optical network units is that the second optical network units have been attached to the first optical network unit at the first moment, while the third optical network unit is not attached to the first optical network unit at the first moment, and the third optical network unit requests to be attached to the first optical network unit after the first moment. In one embodiment, at the first moment, the third optical network unit may not be attached to the first optical network unit due to reasons such as not being physically connected with the optical distribution network, not being powered on, experiencing a malfunction, or entering a sleep mode. However, after the first moment, the third optical network unit may be attached to the first optical network unit by establishing a physical connection between the third optical network unit and the optical distribution network, enabling the third optical network unit, troubleshooting the third optical network unit, and waking up the third optical network unit.

For the first optical network unit and the second optical network units, the third optical network unit belongs to the newly-attached optical network unit. The third optical network unit has not undergone bandwidth allocation processing in steps S1-S3, and the bandwidth may be allocated to the third optical network unit by executing steps S6-S7.

In this embodiment, after step S4 and prior to step S5, a fixed bandwidth may be allocated to the third optical network unit according to the principle of step S1 at a fixed value.

In this embodiment, the principle of executing step S5 of detecting the second bandwidth allocation basis information is the same with the principle of executing step S2 of detecting the first bandwidth allocation basis information. That is, the form of the second bandwidth allocation basis information in step S5 may be the total number of newly-attached third optical network units, a weight corresponding to a communication service type carried by the third optical network unit, or bandwidth allocation request information sent by the third optical network unit.

In step S6, the second remaining bandwidth is a residual value of the dynamic bandwidth after being allocated to each second optical network unit, and is an upper limit of the bandwidth that can continue to be allocated to the third optical network unit.

In step S7, the first optical network unit may refer to the principle of step S3 to allocate the second remaining bandwidth to the third optical network unit according to the second bandwidth allocation basis information.

By executing steps S4-S7, the bandwidth of the first optical network unit may be allocated to the newly-attached third optical network unit on the basis of allocating the bandwidth of the first optical network unit to the attached second optical network unit, so that the first optical network unit can also achieve dynamic allocation and efficient utilization of the bandwidth of the newly-attached optical network unit, reducing bandwidth waste of the first optical network unit.

In this embodiment, when executing step S7, which is the step of allocating the second remaining bandwidth to the third optical network unit according to the second bandwidth allocation basis information, the following steps S701 and S702 may be executed.

In step S701, when a bandwidth corresponding to the second bandwidth allocation basis information does not exceed the second remaining bandwidth, part corresponding to the second bandwidth allocation basis information of the second remaining bandwidth is allocated to the third optical network unit.

In step S702, when the bandwidth corresponding to the second bandwidth allocation basis information exceeds the second remaining bandwidth, a network terminal connected with the third optical network unit as well as a target optical network unit corresponding to the network terminal are determined, wherein the target optical network unit is a second optical network unit with which the network terminal is connected before switched to be connected with the third optical network unit, part or all of a bandwidth allocated to the target optical network unit is recovered, and the recovered part or all of the bandwidth and the second remaining bandwidth are allocated to the third optical network unit.

In step S701, assuming that the bandwidth corresponding to the second bandwidth allocation basis information generated by the third optical network unit is 50 Mbps, that is, the third optical network unit actively requests the first optical network unit to reallocate 50 Mbps of bandwidth, or the first optical network unit detects that another 50Mbps of bandwidth needs to be allocated to the third optical network unit, and the second remaining bandwidth obtained after the dynamic bandwidth is allocated to each second optical network unit is 200 Mbps, then the bandwidth corresponding to the second bandwidth allocation basis information does not exceed the second remaining bandwidth, that is, the second remaining bandwidth is sufficient to meet the bandwidth requirements of the third optical network unit. The first optical network unit may allocate the part, namely 50 Mbps, corresponding to the second bandwidth allocation basis information of bandwidth, in the second remaining bandwidth to the third optical network unit.

In step S702, assuming that the bandwidth corresponding to the second bandwidth allocation basis information generated by the third optical network unit is 250 Mbps, while the second remaining bandwidth after the dynamic bandwidth is allocated to each second optical network unit is 200 Mbps, then the bandwidth corresponding to the second bandwidth allocation basis information exceeds the second remaining bandwidth, that is, the second remaining bandwidth cannot meet the bandwidth requirements of the third optical network unit. The first optical network unit can detect the network terminal connected with the third optical network unit. For example, if the first optical network unit detects that the third optical network unit is currently connected with a network terminal named "END 1", the first optical network unit can continue to detect the target optical network unit corresponding to the network terminal END 1, namely, the second optical network unit with which the network terminal END 1 is connected before switched to be connected with the third optical network unit. The first optical network unit recovers part or all of the bandwidth allocated to the second optical network unit previously connected with the network element END 1, and allocates the recovered part or all of the bandwidth and the second remaining bandwidth to the third optical network unit. In this embodiment, the bandwidth corresponding to the second bandwidth allocation basis information is 250 Mbps, the second remaining bandwidth is 200 Mbps, and a bandwidth gap required by the third optical network unit is 250 Mbps-200 Mbps=50 Mbps. The first optical network unit can recover 50 Mbps from the bandwidth allocated to the target optical network unit during execution of steps S1-S3, thus the bandwidth between the target optical network unit and the first optical network unit is reduced by 50 Mbps, and the recovered 50 Mbps of bandwidth is allocated to the third optical network unit, so that the bandwidth between the third optical network unit and the first optical network unit can achieve the bandwidth of 250 Mbps corresponding to the second bandwidth allocation basis information generated by the third optical network unit.

In step S702, a plurality of the target optical network units may be provided. The number of the target optical network units can be limited by limiting search for the number of the network terminals currently connected with the third optical network unit, or by limiting a time period for tracing the second optical network unit previously connected with the network terminal currently connected with the third optical network unit.

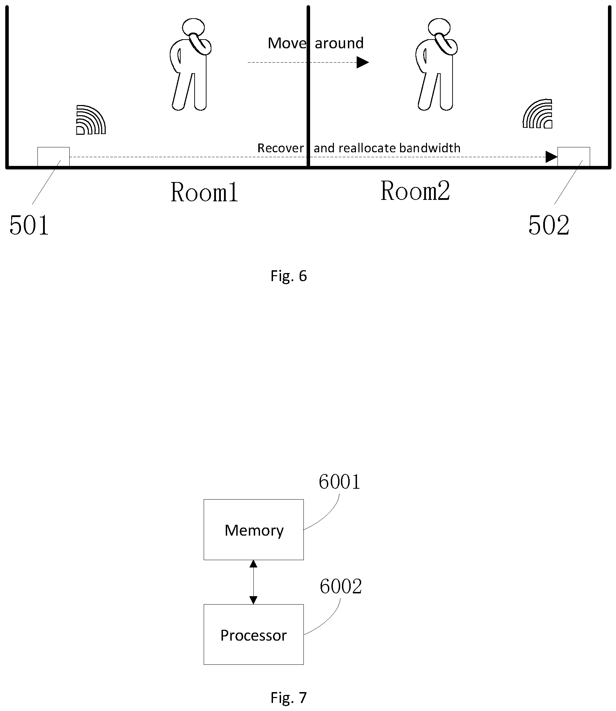

Referring to Fig. 6, taking the application of step S702 in the FTTR scenario as an example, the principle of step S702 is that in the FTTR scenario, each second optical network unit 501 and the third optical network unit 502 are respectively installed in a plurality of rooms within the same building, the second optical network units and the third optical network unit are connected with signal transceivers such as WiFi to achieve wireless signal coverage in different spaces within the building, and a wireless signal coverage range may be small enough, so that a wireless signal of each second optical network unit or third optical network unit only covers the room where it is located. A user may hold the network terminals such as a mobile phone (named "END 1") in hand to move around in different rooms. For example, the target optical network unit in this embodiment is installed in Room 1, and the third optical network unit in this embodiment is installed in Room 2. If the user stays in Room 1 for a long time and uses the target optical network unit, the third optical network unit installed in Room 2 will enter a sleep state after being unused for a long time. Therefore, at the first moment, the third optical network unit becomes an optical network unit that is not attached to the first optical network unit. After the first moment, when the user walks from Room 1 to Room 2, the network terminal END 1 held by the user is switched from being connected with the target optical network unit installed in Room 1 to being connected with the third optical network unit installed in Room 2. The third optical network unit installed in Room 2 becomes the optical network unit attached to the first optical network unit, a network load generated by the network terminal END 1 on the target optical network unit installed in Room 1 is also switched to the third optical network unit installed in Room 2, the bandwidth demand of the target optical network unit installed in Room 1 is reduced, and the bandwidth demand of the third optical network unit installed in Room 2 is increased. By executing step S702, bandwidth resources allocated by the first optical network unit to the target optical network unit installed in Room 1 can be transferred to the third optical network unit installed in Room 2 to achieve efficient utilization of the bandwidth of the first optical network unit.

At the same time as the first optical network unit executes steps S1-S3, the second optical network unit may execute the following steps P1 to P3.

In step P1, a fixed bandwidth allocated by the first optical network unit is obtained.

In step P2, first bandwidth allocation basis information is sent to the first optical network unit.

In step P3, a dynamic bandwidth allocated by the first optical network unit is obtained, wherein the dynamic bandwidth is allocated by the first optical network unit according to the first bandwidth allocation basis information.

Step P1 corresponds to step S1, step P2 corresponds to step S2, and step P3 corresponds to step S3.

When executing step P2, the second optical network unit may actively send the first bandwidth allocation basis information to the first optical network unit, or return the first bandwidth allocation basis information to the first optical network unit when requested or queried by the first optical network unit. For example, when the first optical network unit executes step S2 in the form of executing steps S201A-S202A, the first bandwidth allocation basis information required by the first optical network unit is the total number of the second optical network units. The first optical network unit may send a query instruction to the second optical network units attached thereto to query a state of attachment. Therefore, from the side of the second optical network unit, the first bandwidth allocation basis information sent by each second optical network unit may be feedback information to the query instruction sent by the first optical network unit.

In step P3, for a single second optical network unit, the "dynamic bandwidth" may refer to a part of the total dynamic bandwidth allocated by the first optical network unit.

By executing steps P1-P3, the second optical network unit may achieve allocation of the fixed and dynamic bandwidth of the first optical network unit together with steps S1-S3 executed by the first optical network unit. Therefore, the technical effect of steps P1-P3 is the same as that of steps S1-S3.

The first optical network unit and the second optical network unit in this embodiment may be taken as a part of the optical communication system for FTTR. The first optical network unit may be attached by one or more second optical network units, the first optical network unit may execute various steps including steps S1-S7 in the bandwidth allocation method in this embodiment, and the second optical network unit may execute various steps including steps P1-P3 in the bandwidth allocation method in this embodiment, thereby achieving the same technical effect as the bandwidth allocation method in the embodiment of the present application.

In this embodiment, when executing step P2, which is the step of sending the first bandwidth allocation basis information to the first optical network unit, the second optical network unit may execute the following steps P201A-P202A.

In step P201A, a communication service type currently carried is detected, wherein the communication service type has a corresponding priority, and the priority of the communication service type is in positive correlation with a weight of the second optical network unit.

In step P202A, the weight of the second optical network unit is taken as the first bandwidth allocation basis information, and sent to the first optical network unit.

Steps P201A-P202A are the first execution manner of step P2. Steps P201A-P202A executed by the second optical network unit correspond to steps S201B-S204B executed by the first optical network unit, so that the first optical network unit can obtain the first bandwidth allocation basis information.

In this embodiment, when executing step P2, which is the step of sending the first bandwidth allocation basis information to the first optical network unit, the second optical network unit may execute the following steps P201B-P202B.

In step P201B, bandwidth allocation request information is generated.

In step P202B, the bandwidth allocation request information is taken as the first bandwidth allocation basis information, and sent to the first optical network unit.

Steps P201B-P202B are the second execution manner of step P2. Steps P201B-P202B executed by the second optical network unit correspond to steps S201C-S202C executed by the first optical network unit, so that the first optical network unit can obtain the first bandwidth allocation basis information.

In this embodiment, an optical communication system used for FTTR may further include a second optical network unit attached to a first optical network unit, and an optical distribution network that establishes a physical connection between the first optical network unit and the second optical network unit.

In this embodiment, a bandwidth allocation method may be executed using a computer device shown in Fig. 7. Referring to Fig. 7, the computer device includes a memory 6001 and a processor 6002, wherein the memory 6001 is configured to store at least one program, and the processor 6002 is configured to load at least one program to execute the bandwidth allocation method in the embodiment of the present application. By running the device, the same technical effect as the bandwidth allocation method in the embodiment of the present application may be achieved.

In an embodiment of the present application, a storage medium is provided, and stores a processor executable program, wherein the processor executable program, when executed by a processor, is configured to execute the bandwidth allocation method in the embodiment of the present application. By using the storage medium, the same technical effect as the bandwidth allocation method in the embodiment of the present application may be achieved.

The beneficial effects of the present application include: the bandwidth allocation method in the embodiment may ensure a basic communication function of each second optical network unit by allocating the fixed bandwidth to the second optical network unit. By allocating the dynamic bandwidth to each second optical network unit through the allocation ratio determined according to the first bandwidth allocation basis information, the dynamic bandwidth of the first optical network unit can be allocated according to a working state of each second optical network unit or a state of attachment to the first optical network unit, so that the allocation of the dynamic bandwidth can match the working state of each second optical network unit or the number of the second optical network units attached to the first optical network unit, thereby achieving dynamic allocation and efficient utilization of the bandwidths of the optical network units in the optical communication network, and reducing bandwidth waste in the optical communication network.

It should be noted that, unless otherwise specified, when a feature is referred to as "fixed" or "connected" to another feature, it may be directly fixed or connected to another feature, or indirectly fixed or connected to another feature. In addition, the descriptions of up, down, left, right, etc. used in the present disclosure are only relative to the mutual positional relationship of the various components of the present disclosure in the accompanying drawings. The singular forms "a", "said" and "this" used in the present disclosure are also intended to include the plural forms as well, unless the context clearly indicates otherwise. In addition, unless otherwise defined, all technical and scientific terms used in this embodiment have the same meaning as commonly understood by those skilled in the art. The terms used in the specification of the present disclosure are only intended to describe the specific embodiment and are not intended to limit the present application. The term "and/or" used in this embodiment includes any combination of one or more related listed items.

It should be understood that the terms "first", "second", "third" and the like may be employed in the present disclosure to describe various elements, but these elements should not be limited to these terms. These terms are merely used for distinguishing the same type of elements from one another. For example, in a case of not departing from the scope of the present disclosure, a first element may also be called a second element, and similarly, the second element may also be called the first element. The use of any and all examples or exemplary language ("for example", "such as", etc.) provided in this embodiment is only intended to better illustrate the embodiments of the present application and does not limit the scope of the present application unless otherwise required.

It should be recognized that the embodiments of the present application may be realized or implemented by computer hardware, a combination of hardware and software, or through computer instructions stored in a non-temporary computer-readable memory. The method can be implemented in the computer program using a standard programming technology, including a non-transitory computer-readable storage medium configured with the computer program, wherein the storage medium configured in this way enables the computer to operate in a specific and predefined manner, according to the method and accompanying drawings described in the specific embodiments. Each program can be implemented in a high-level procedural or object-oriented programming language to communicate with a computer system. However, if necessary, the program can be implemented in assembly or machine language. In any case, the language can be a compiled or interpreted language. In addition, for this purpose, the program can run on a programmed application-specific integrated circuit.

In addition, the operations of the processes described in this embodiment can be executed in any suitable order, unless otherwise indicated in this embodiment or otherwise clearly contradictory to the context. The processes (or variations and/or combinations thereof) described in this embodiment can be executed under the control of one or more computer systems configured with executable instructions, and can be implemented as a code (e.g. executable instructions, one or more computer programs, or one or more applications) collectively executed on one or more processors, by hardware, or a combination thereof. The computer program includes a plurality of instructions executable by one or more processors.

In one embodiment, the method can be implemented in any type of suitable computing platforms to which are operable to be connected, including but not limited to a personal computer, a mini computer, a mainframe, a workstation, a network or distributed computing environment, a standalone or integrated computer platform, or communication with charged particle tools or other imaging devices, and so on. The various aspects of the present application can be implemented in machine-readable codes stored on the non-temporary storage medium or device, whether removable or integrated into computing platforms, such as a hard disk, an optical read and/or write storage medium, RAM and ROM, so that they can be read by a programmable computer. The storage medium or the device, when read by the computer, can be used to configure and operate the computer to execute the processes described herein. In addition, the machine-readable code, or parts thereof, can be transmitted over a wired or wireless network. When such medium includes instructions or programs that combine a microprocessor or other data processors to implement the steps described above, the invention described in this embodiment includes these and other types of non-temporary computer-readable storage media. When programmed according to the methods and technologies described in the present application, the present application further includes the computer itself.

The computer programs can be applied to input data to perform the functions described in this embodiment, thereby converting the input data to generate output data stored in a non-volatile memory. The output information can further be applied to one or more output devices such as a display. In the embodiments of the present application, the converted data represents physical and tangible objects, including specific visual depictions of physical and tangible objects generated on the display.

The above are only some embodiments of the present application, and the present application is not limited to the above implementations, as long as they achieve the technical effects of the present application by the same means. Any modifications, equivalent substitutions, improvements, etc. made within the essence and principles of the present application should be included in the scope of protection of the present application. Within the scope of protection of the present application, there may be various modifications and changes to its technical solutions and/or implementations.

## Claims

1. A bandwidth allocation method, applied to a first optical network unit, comprising:
allocating a fixed bandwidth to each of at least one second optical network unit, wherein the second optical network unit is an optical network unit that is already attached to the first optical network unit at a first moment;
obtaining first bandwidth allocation basis information; and
allocating a matching dynamic bandwidth to each the second optical network unit according to the first bandwidth allocation basis information.

2. The bandwidth allocation method according to claim 1, wherein obtaining the first bandwidth allocation basis information comprises:
detecting a total number of the second optical network units; and
taking the total number of the second optical network units as the first bandwidth allocation basis information.

3. The bandwidth allocation method according to claim 2, wherein allocating the matching dynamic bandwidth to each the second optical network unit according to the first bandwidth allocation basis information comprises:
allocating the dynamic bandwidth to each the second optical network unit according to the total number of the second optical network units.

4. The bandwidth allocation method according to claim 1, wherein obtaining the first bandwidth allocation basis information comprises:
determining a priority of a communication service type carried by each the second optical network unit;
determining a weight of the second optical network unit according to the priority, wherein the weight of the second optical network unit is in positive correlation with the priority of the corresponding communication service type; and
taking the weight of each the second optical network unit as the first bandwidth allocation basis information.

5. The bandwidth allocation method according to claim 4, wherein allocating the matching dynamic bandwidth to each the second optical network unit according to the first bandwidth allocation basis information comprises:
allocating the dynamic bandwidth to each the second optical network unit by taking the weight of each the second optical network unit as an allocation ratio.

6. The bandwidth allocation method according to claim 1, wherein obtaining the first bandwidth allocation basis information comprises:
receiving bandwidth allocation request information uploaded by part or all the second optical network units; and
taking each the bandwidth allocation request information as the first bandwidth allocation basis information.

7. The bandwidth allocation method according to claim 6, wherein allocating the matching dynamic bandwidth to each the second optical network unit according to the first bandwidth allocation basis information comprises:
allocating, upon the condition that a sum of bandwidths corresponding to all the bandwidth allocation request information does not exceed a first remaining bandwidth, part corresponding to the bandwidth allocation request information of the first remaining bandwidth to the second optical network unit, wherein the first remaining bandwidth is a remaining bandwidth by removing a fixed bandwidth allocated to each the second optical network unit from a total bandwidth of the first optical network unit; or
allocating, upon the condition that a sum of bandwidths corresponding to all the bandwidth allocation request information exceeds the first remaining bandwidth, the first remaining bandwidth to each the second optical network unit proportionally by taking the bandwidths corresponding to all the bandwidth allocation request information as an allocation ratio.

8. The bandwidth allocation method according to claim 1, further comprising:
controlling a third optical network unit to be attached to the first optical network unit, wherein the third optical network unit is an optical network unit that is not attached to the first optical network unit at the first moment and requests to be attached to the first optical network unit after the first moment;
obtaining second bandwidth allocation basis information by detecting the third optical network unit;
determining a second remaining bandwidth remained in the first optical network unit after the dynamic bandwidth is allocated to each the second optical network unit; and
allocating the second remaining bandwidth to the third optical network unit according to the second bandwidth allocation basis information.

9. The bandwidth allocation method according to claim 8, wherein allocating the second remaining bandwidth to the third optical network unit according to the second bandwidth allocation basis information comprises:
allocating, upon the condition that a bandwidth corresponding to the second bandwidth allocation basis information does not exceed the second remaining bandwidth, part corresponding to the second bandwidth allocation basis information of the second remaining bandwidth to the third optical network unit; or
upon the condition that a bandwidth corresponding to the second bandwidth allocation basis information exceeds the second remaining bandwidth, determining a network terminal connected with the third optical network unit as well as a target optical network unit corresponding to the network terminal, wherein the target optical network unit is a second optical network unit with which the network terminal is connected before switched to be connected with the third optical network unit, recovering part or all of bandwidth allocated to the target optical network unit, and allocating the recovered part or all of the bandwidth and the second remaining bandwidth to the third optical network unit.

10. A bandwidth allocation method, applied to a second optical network unit, comprising:
obtaining a fixed bandwidth allocated by a first optical network unit, wherein the second optical network unit is already attached to the first optical network unit at a first moment;
sending first bandwidth allocation basis information to the first optical network unit; and
obtaining a dynamic bandwidth allocated by the first optical network unit, wherein the dynamic bandwidth is allocated by the first optical network unit according to the first bandwidth allocation basis information.

11. The bandwidth allocation method according to claim 10, wherein sending the first bandwidth allocation basis information to the first optical network unit comprises:
detecting a communication service type currently carried, wherein the communication service type has a corresponding priority, and the priority of the communication service type is in positive correlation with a weight of the second optical network unit; and
taking the weight of the second optical network unit as the first bandwidth allocation basis information, and sending the weight of the second optical network unit to the first optical network unit.

12. The bandwidth allocation method according to claim 10, wherein sending the first bandwidth allocation basis information to the first optical network unit comprises:
generating bandwidth allocation request information; and
taking the bandwidth allocation request information as the first bandwidth allocation basis information, and sending the bandwidth allocation request information to the first optical network unit.

13. An optical communication system, comprising a first optical network unit and at least one second optical network unit; wherein
the first optical network unit is configured to be attached by one or more second optical network units; and
the first optical network unit is further configured to allocate a fixed bandwidth to each second optical network unit according to a fixed value, obtain first bandwidth allocation basis information, and allocate a matching dynamic bandwidth to each second optical network unit according to the first bandwidth allocation basis information.

14. A computer device, comprising a memory and a processor, wherein the memory is configured to store at least one program, and the processor is configured to load the at least one program to execute the bandwidth allocation method according to any one of claims 1-9 or 10-12.

15. A storage medium, storing a processor executable program, wherein the processor executable program, when executed by a processor, is configured to execute the bandwidth allocation method according to any one of claims 1-9 or 10-12.
